# EUROPÄISCHE PATENTSCHRIFT

(11) **EP 0 944 287 B1**
(45) Veröffentlichungstag und Bekanntmachung des Hinweises auf die Patenterteilung: **19.10.2005**
(21) Anmeldenummer: 99104336.5
(22) Anmeldetag: 04.03.1999
(51) Int. Cl.: H04L 12/56

(54) **Verfahren zur Beschleunigung des Verbindungsaufbaus zwischen vermittelten Teilnehmern**
Method to accelerate the connection set up between switched subscribers
Procédé pour accélerer l' établissement d' une connexion entre des abonnés commutés

(43) Veröffentlichungstag der Anmeldung: 22.09.1999
(73) Patentinhaber: Tenovis GmbH & Co. KG, 60362 Frankfurt am Main (DE)
(72) Erfinder: Artun, Berkan, 64293 Darmstadt (DE); Wagner, Joachim, 35625 Huettenberg (DE); Schmidt, Werner, 63762 Grossostheim (DE)
(74) Vertreter: Meissner, Bolte & Partner

(56) Entgegenhaltungen:
- WO-A-96/27965
- US-A- 5 444 699

## Beschreibung

### Stand der Technik

Der Verbindungsaufbau in ATM-Vermittlungsnetzen wird üblicherweise über ein Signalisierungsprotokoll angestoßen. Dies ist dem Verbindungsaufbau in ISDN-Anlagen sehr ähnlich. Insbesondere durch die Signalisierungsprozedur mit Quittierung und Eintragung von Verbindungen in sogenannte Routing-Tabellen ergeben sich beim Verbindungsaufbau Zeitverluste. Die Zeitverluste wachsen linear mit der Anzahl der an einer Verbindung beteiligten ATM-Knoten. Im wesentlichen setzen sich diese Zeitverluste aus folgen Anteilen zusammen: Nachrichtenbearbeitung, Einstellung des ATM-Koppelnetzes (Switchfabric) und beteiligter Anschlußorgane.

Aus der WO 96/27965 sind ein Verfahren und eine Vorrichtung zur dynamischen Bandbreitensteuerung in einem ATM-Vermittlungsnetz bekannt. In Reaktion auf von einer Endeinrichtung empfangene ATM-Zellen bestimmt die Steuereinrichtung die Bandbreitenanforderung der empfangenen Zellen und veranlasst ggf. weitere Einrichtungen im Netz, zusätzlich zu einer Basisbandbreite für die Übermittlung der ATM-Zellen zusätzlich Bandbreite zuzuweisen. Hierdurch kann die einer Verbindung zur Verfügung gestellte Bandbreite während einer bereits aktiven Verbindung optimiert werden. Ein Hinweis, wie ein Verbindungsaufbau über ein Vermittlungsnetz, insbesondere ein ATM-Vermittlungsnetz, beschleunigt werden könnte, ist der Druckschrift nicht zu entnehmen.

### Vorteile der Erfindung

Die Maßnahmen gemäß den Patentansprüchen führen zu einem beschleunigten Verbindungsaufbau bei vermittelten Teilnehmern. Außerdem steigt die Verfügbarkeit gegenüber herkömmlichen Lösungen. Damit ist auch ein höherer Auslastungsgrad möglich.

Die Erfindung beruht auf folgenden Erkenntnissen: Die Erfindung nutzt Eigenschaften des ATM aus, um den Einfluß des Zeitverlustes bei der Einstellung des ATM-Koppelnetzes (Switchfabric) und beteiligter Anschlußorgane zu minimieren. Das Einstellen des Koppelnetzes bedeutet, daß Einträge in Routing-Tabellen gemacht werden müssen. Tabellenindex ist bei ATM-Übertragung der für die Verbindung verwendete VPI/VCI (virtueller Kanalbezeichner im Kopf einer ATM-Zelle). Da der VPI/VCI Wertevorrat praktisch unbegrenzt ist, werden abhängig von der Gesamtkonfiguration voreingestellte Verbindungskanäle bereitgehalten, z. B. durch Verwendung einer Pufferspeichereinrichtung (Caching Entity) zwischen dem eigentlichen Koppelnetz und dessen Steuereinrichtung. Beim Verbindungsaufbau wird beispielsweise einer dieser voreingestellten Verbindungskanäle (VPI/VCI) verwendet. Damit entfällt die neue Indizierung der Routing-Tabelle völlig.

Liegen keine Verbindungsaufbauwünsche an, wird die Zeit genutzt, um den Vorrat an voreingestellten Verbindungskanälen, z. B. in der Caching Entity, zu ergänzen. Das Verfahren nach der Erfindung gestattet darüber hinaus die Voreinstellung der entsprechenden Anschlußorgane.

Das Verfahren nach der Erfindung hat keine Auswirkung auf die Verfügbarkeit und Leistungsfähigkeit des ATM-Verfahrens. Es treten insbesondere keine Nachteile hinsichtlich der verfügbaren Bandbreite des Vermittlungsnetzes auf, da die verwendeten Voreinstellungen nichts mit den Routing-Tabellen zu tun haben.

### Zeichnungen

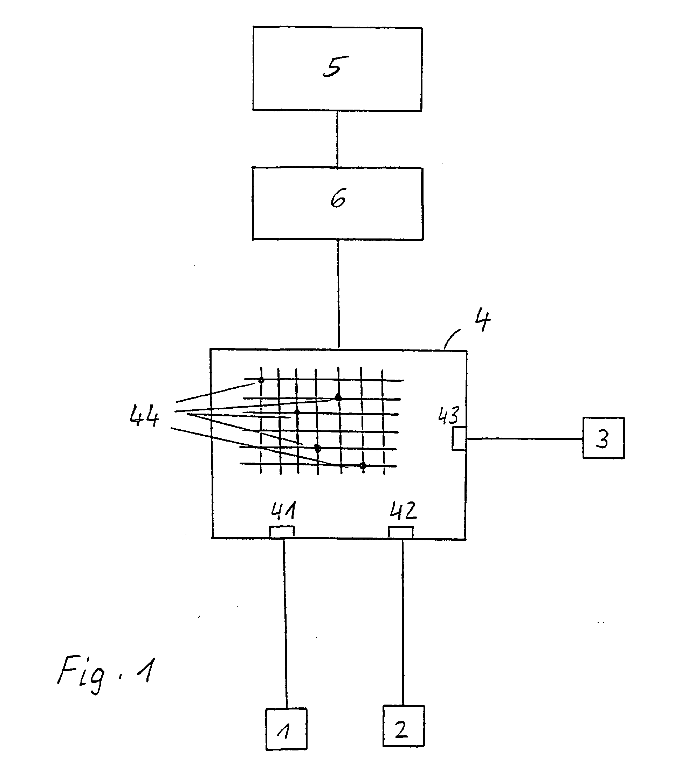

Anhand des in Figur 1 gezeigten Blockschaltbildes wird die Erfindung näher erläutert.

### Beschreibung von Ausführungsbeispielen

Bei dem in Figur 1 dargestellten Ausführungsbeispiel sind drei zu vermittelnde Teilnehmer 1,2 und 3 als Repräsentanten einer Vielzahl von Teilnehmern über ein ATM-Koppelnetz 4 miteinander verbindbar. Zwischen der Steuereinrichtung 5 des ATM-Koppelnetzes 4 und dem eigentlichen Koppelnetz (Switchfabric) selbst ist eine Pufferspeichereinrichtung 6 vorgesehen, die vorzugsweise als intelligente "Caching Entity" ausgebildet ist. Diese Caching Entity ist transparent für den Steuerdatenfluß zwischen Steuereinrichtung 5 und Koppelnetz 4. Das Einstellen des ATM-Koppelnetzes 4 bedeutet, daß Einträge in Routing-Tabellen gemacht werden müssen. Tabellenindex ist dafür die Verbindung verwendete VPI/VCI (virtueller Kanalbezeichner im Kopf einer ATM-Zelle) . Da der VPI/VCI-Wertevorrat praktisch unbegrenzt ist, werden abhängig von der Gesamtkonfiguration voreingestellte Verbindungskanäle zwischen Teilnehmern 1, 2, 3 von der Caching Entity 6 bereitgehalten. Bei einem Verbindungswunsch eines Teilnehmers wird einer dieser bereitgehaltenen Verbindungskanäle für den Verbindungsaufbau verwendet. Damit entfällt eine neue Indizierung der Routing-Tabelle völlig.

Zur Bereithaltung voreingestellter Verbindungskanäle werden Verbindungsparameter in der Caching Entity 6 zwischengespeichert, die bei einem Verbindungswunsch entsprechende Koppelnetzelemente 44, vergleichbar mit Koppelfeldpunkten, des Koppelnetzes 4 aktivieren, ohne daß auf vorherige Einträge in Routing-Tabellen zurückgegriffen werden muß. Die Caching Entity 6 analysiert laufend Verkehrsparameter wie Bandbreite, Zellrate, Dienstequalität (Verlustrate, durchschnittliche Bitrate, Jitter) der gewünschten Verbindungen. In Abhängigkeit dieser Analyse werden die für eine Verbindung entsprechenden Anschlußorgane 41, 42, 43 voreingestellt, wobei folgende Überlegungen eine Rolle spielen: Die bei ATM meist verbreitete Anwendung ist die LAN Emulation. Hier treten immer dieselben Verkehrsparameter auf. Dies wird ausgenützt, um auch in den Anschlußorganen die UPC (Usage Parameter Control) voreinzustellen. Dies wird jedoch vorzugsweise nur im Falle niedriger und mittlerer Last auf den entsprechenden Anschlußorganen durchgeführt, da ein Vorbelegen von Switch-Ressourcen hier notwendig ist.

Ein Eintrag der Verbindungsparameter in die Routing-Tabellen für das ATM-Koppelnetz 4 wird erst nach erfolgtem Verbindungsaufbau vorgenommen durch eine entsprechende Meldung von der Caching Entity 6 an die Steuereinrichtung 5.

Liegen keine Verbindungsaufbauwünsche an, wird diese Zeit von der Caching Entity 6 genutzt, um den Vorrat an voreingestellten Verbindungskanälen zu ergänzen. Das Koppelnetz ist selbst lernfähig. Verbindungswünsche können aufgrund der Analyse des vorherigen Verkehrsaufkommens prognostiziert werden. Mittels solcher Prognosen kann die Voreinstellung und Bereitstellung der Verbindungskanäle erfolgen. Um den Verbindungsaufbau besonders zu beschleunigen, können die Koppelnetzelemente 44 so voreingestellt werden, daß alle Vorbereitungen bis auf einen Registerzugriff - Setzen von einem Bit - abgeschlossen werden, so daß ein Aktivschalten der Verbindung nur noch das Setzen eines Bits erfordert.

Das Verfahren nach der Erfindung kann natürlich auch für Koppelnetze und/oder Koppelfelder benutzt werden, die nicht auf ATM basieren, z. B. alle Zeit- und/oder Raumkoppelfelder, wo Quittierungen, Signalisierungen oder spezielle Protokolle zu Zeitverzögerungen beim Verbindungsaufbau führen.

## Patentansprüche

1. Verfahren zum Verbindungsaufbau zwischen zu vermittelnden Teilnehmern (1, 2, 3), wobei die Vermittlung insbesondere über ein ATM-Koppelnetz (4) erfolgt,
**dadurch gekennzeichnet, daß**
das Verfahren die Kombination folgender Merkmale umfasst:
- es werden voreingestellte, nicht aktivierte Verbindungskanäle für Verbindungen zwischen den Teilnehmern (1,2,3) bereit gehalten
- bei einem Verbindungswunsch eines Teilnehmers wird einer dieser bereitgehaltenen Verbindungskanäle für den Verbindungsaufbau benutzt
- zur Beschleunigung des Verbindungsaufbaus werden Verbindungsparameter zwischengespeichert, die bei einem Verbindungswunsch entsprechende Koppelnetzelemente (44) des Koppelnetzes (4) aktivieren, ohne dass auf vorherige Einträge in Routing-Tabellen für das ATM-Koppelnetz zurückgegriffen werden muss.

2. Verfahren nach Anspruch 1, **dadurch gekennzeichnet, daß** Verkehrsparameter, wie z.B. Bandbreite, Zellrate, Dienstequalität..., gewünschter Verbindungen analysiert werden und in Abhängigkeit dieser Analyse Anschlußorgane (41,42,43) voreingestellt werden.

3. Verfahren nach Anspruch 2, **dadurch gekennzeichnet, daß** die Voreinstellung der Anschlußorgane (41,42,43) aufgrund von analysierten Verkehrsparametern nur im Falle niedriger und mittlerer Last auf den entsprechenden Anschlußorganen (41,42,43) vorgenommen wird.

4. Verfahren nach einem der Ansprüche 1 bis 3, **dadurch gekennzeichnet, daß** erst nach dem Verbindungsaufbau ein Eintrag der Verbindungsparameter in Routing-Tabellen für das ATM-Koppelnetz (4) vorgenommen wird.

5. Verfahren nach einem der Ansprüche 1 bis 4, **dadurch gekennzeichnet, daß** Verbindungswünsche aufgrund der Analyse des vorherigen Verkehrsaufkommens prognostiziert werden und mittels dieser Prognosen die Voreinstellung und Bereitstellung der Verbindungskanäle erfolgt.

6. Verfahren nach Anspruch 5, **dadurch gekennzeichnet, daß** die Koppelelemente (44) des Koppelnetzes (4) für die Bereitstellung eines Verbindungskanals so voreingestellt werden, daß für einen Verbindungsaufbau nur noch ein Bit gesetzt werden muß.

7. Verfahren nach einem der Ansprüche 1 bis 6, **dadurch gekennzeichnet, daß** zum Bereithalten voreingestellter Verbindungskanäle der virtueller Kanalbezeichner im Kopf einer ATM-Zelle benutzt wird.

8. Verfahren nach einem der Ansprüche 1 bis 7, **dadurch gekennzeichnet, daß** die Zeiten, in denen keine Verbindungswünsche vorliegen, zur Ergänzung des Vorrats an voreingestellten Verbindungskanälen genutzt wird.

9. Anordnung zum Verbindungsaufbau zwischen zu vermittelnden Teilnehmern (1, 2, 3), mit mitteln zum Durchführen des Verfahrens nach einem der Ansprüche 1 bis 8, mit einem Koppelnetz (4) zur Vermittlung von Teilnehmern (1, 2, 3) und einer Steuereinrichtung (5) des Koppelnetzes,
**gekennzeichnet durch**
eine zwischen Steuereinrichtung (5) und Koppelnetz (4) vorgesehene Pufferspeichereinrichtung (6), die ausgebildet ist,
- um den Steuerungsdatenfluss zwischen Steuereinrichtung (5) und Koppelnetz (4) transparent weiterzuleiten und
- um Verbindungsparameter zur Bereithaltung voreingestellter Verbindungskanäle für einen Verbindungsaufbau zwischen Teilnehmern (1, 2, 3) zwischenzuspeichern.

10. Anordnung nach Anspruch 9,
**dadurch gekennzeichnet, dass**
die Pufferspeichereinrichtung (6) ausgebildet ist,
- um bei einem Verbindungswunsch den Verbindungsparametern entsprechende Koppelnetzelemente (44) des Koppelnetzes (4) zu aktivieren und
- um entsprechende Anschlussorgane (41, 42, 43) des Koppelnetzes (4) voreinzustellen.

## Claims

1. A method of setting up a connection between subscribers (1, 2, 3) to be switched, said switching in particular taking place via an ATM switching network,
**characterized in that**
the method comprises the following features in combination:
- preset, non-activated connection channels are kept ready for connections between the subscribers (1, 2, 3),
- upon a subscriber's connection request, one of these connection channels that are kept ready is used for setting up the connection,
- for an acceleration of the connection set-up, connection parameters are temporarily stored which activate corresponding switching network elements (44) of the switching network (4) upon a connection request without the need of taking recourse to previous entries in routing tables for the ATM switching network.

2. The method according to claim 1, **characterized in that** traffic parameters such as bandwidth, cell rate, service quality, etc. of requested connections are analyzed and connecting elements (41, 42, 43) are preset on dependence of this analysis.

3. The method according to claim 2, **characterized in that** presetting of the connecting elements (41, 42, 43) based on analyzed traffic parameters is only performed in the case of low and medium load on the corresponding connecting elements (41, 42, 43).

4. The method according to any one of claims 1 through 3, **characterized in that** an entry of the connection parameters into routing tables for the ATM switching network (4) is only performed after the connection is set up.

5. The method according to any one of claims 1 through 4, **characterized in that** connection requests are forecast based on the analysis of the previous traffic volume, and presetting and making available the connection channels is performed using these forecasts.

6. The method according to claim 5, **characterized in that** the switching elements (44) of the switching network (4) for making available a connection channel are preset in such a manner that only one bit has to be set for a connection set-up.

7. The method according to any one of claims 1 through 6, **characterized in that** a virtual channel identifier in the header of an ATM cell is used for keeping ready preset connection channels.

8. The method according to any one of claims 1 through 7, **characterized in that** the times in which connections requests are not present, are utilized for supplement the supply of preset connection channels.

9. An arrangement for setting up a connection between subscribers (1, 2, 3) to be switched, including means for performing the method according to any one of claims 1 through 8, with a switching network (4) for switching subscribers (1, 2, 3), and a control means (5) of the switching network,
**characterized by**
a buffer memory means (6) provided between the control means (5) and the switching network (4) and configured so as to
- transfer the control data flow between the control means (5) and the switching network (4) in a transparent manner, and
- buffer connection parameters for keeping ready preset connection channels for setting up a connection between subscribers (1, 2, 3).

10. The arrangement according to claim 9,
**characterized in that**
said buffer memory means (6) is configured so as to
- activate switching network elements (44) of the switching network (4) corresponding to the connection parameters upon a connection request, and
- preset corresponding connecting elements (41, 42, 43) of the switching network (4).

## Revendications

1. Procédé pour établir une liaison entre des participants (1, 2, 3) à mettre en communication, la communication s'effectuant en particulier par un réseau de couplage ATM (4),
**caractérisé en ce que**
le procédé comprend la combinaison des caractéristiques suivantes :
- des canaux de liaison, préréglés, non activés, sont tenus prêts pour des liaisons entre les participants (1, 2, 3),
- lors d'un souhait de liaison d'un participant, un de ces canaux de liaison tenus prêts est utilisé pour établir la liaison,
- pour accélérer l'établissement de la liaison, des paramètres de liaison sont enregistrés de façon intermédiaire, qui, lors d'un souhait de liaison, activent des éléments de couplage de réseau (44) correspondants du réseau (4), sans qu'il soit nécessaire de recourir à des enregistrements précédents dans des tables de routage pour le réseau de couplage ATM.

2. Procédé selon la revendication 1, **caractérisé en ce que** des paramètres de trafic tels, par exemple, bande passante, taux de cellule, égalité de service, ... , de liaisons souhaitées sont analysés et, qu'en fonction de cette analyse, des organes de raccordement (41, 42, 43) sont préréglés.

3. Procédé selon la revendication 2, **caractérisé en ce que** le préréglage des organes de raccordement (41, 42, 43) en raison de paramètres de trafic analysés n'est réalisé qu'en cas de charge faible et moyenne sur les organes correspondants de raccordement (41, 42, 43).

4. Procédé selon l'une quelconque des revendications 1 à 3, **caractérisé en ce que** seulement après l'établissement de la liaison, un enregistrement des paramètres de liaison est réalisé dans des tables de routage pour le réseau de couplage ATM (4).

5. Procédé selon l'une quelconque des revendications 1 à 4, **caractérisé en ce que** des souhaits de liaison sont pronostiqués en raison de l'analyse des occurrences précédentes de trafic et que le préréglage et la mise à disposition des canaux de liaison s'effectuent au moyen de ces pronostics.

6. Procédé selon la revendication 5, **caractérisé en ce que** les éléments de couplage (44) du réseau de couplage (4) pour la mise à disposition d'un canal de liaison sont préréglés de manière telle qu'un seul bit doit encore être positionné pour un établissement de liaison.

7. Procédé selon l'une quelconque des revendications 1 à 6, **caractérisé en ce qu'**une désignation virtuelle de canal dans l'en-tête d'une cellule ATM est utilisée pour la mise à disposition de canaux de liaison préréglés.

8. Procédé selon l'une quelconque des revendications 1 à 7, **caractérisé en ce que** les temps pendant lesquels n'existent aucun souhait de liaison sont utilisés pour compléter la réserve de canaux de liaison préréglés.

9. Disposition pour établir une liaison entre des participants (1, 2, 3) à mettre en communication, comportant des moyens pour réaliser le procédé selon l'une quelconque des revendications 1 à 8, comportant un réseau de couplage (4) pour mettre en communication des participants (1, 2, 3) et un dispositif de commande (5) du réseau de couplage,
**caractérisée par**
un dispositif de mémoire tampon (6) prévu entre le dispositif de commande (5) et le réseau de couplage (4) qui est constitué
- pour retransmettre de façon transparente le flot de données de commande entre dispositif de commande (5) et réseau de couplage (4), et
- pour enregistrer de façon intermédiaire des paramètres de liaison pour maintenir à disposition des canaux de liaison préréglés pour un établissement de liaison entre des participants (1, 2, 3).

10. Disposition selon la revendication 9,
**caractérisée en ce que**
le dispositif de mémoire tampon (6) est constitué
- pour activer les paramètres de liaison d'éléments de réseau de couplage (44) correspondants du réseau de couplage (4) lors d'un souhait de liaison et
- pour prérégler des organes de raccordement (41, 42, 43) correspondants du réseau de couplage (4).
